# EUROPÄISCHE PATENTSCHRIFT

(11) **EP 1 868 830 B1**
(45) Veröffentlichungstag und Bekanntmachung des Hinweises auf die Patenterteilung: **28.08.2013**
(21) Anmeldenummer: 06705808.1
(22) Anmeldetag: 19.01.2006
(51) Int. Cl.: B60J 1/18, B60J 7/12

(54) **CABRIOLET-FAHRZEUG MIT EINEM GESONDERT BEWEGLICHEN HECKFENSTER**
CONVERTIBLE VEHICLE WITH A SEPARATELY MOVEABLE REAR WINDOW
CABRIOLET A LUNETTE ARRIERE MOBILE SEPAREE

(30) Priorität: 06.04.2005 DE 102005015678
(43) Veröffentlichungstag der Anmeldung: 26.12.2007
(73) Patentinhaber: Valmet Automotive Oy, 23500 Uusikaupunki (FI)
(72) Erfinder: BENSMANN, Heiner, 49124 Georgsmarienhütte (DE); POHLMANN, Heiko, 49086 Osnabrück (DE); PLETTENDORF, Holger, 49170 Hagan a.T.W. (DE)
(74) Vertreter: Kronthaler, Schmidt & Coll.
(86) Internationale Anmeldenummer: PCT/DE2006/000069
(87) Internationale Veröffentlichungsnummer: WO 2006/105744

(56) Entgegenhaltungen:
- EP-A- 0 530 134
- EP-A- 1 398 189
- US-A- 6 145 909
- US-A1- 2003 025 351

## Beschreibung

Die Erfindung betrifft ein Cabriolet-Fahrzeug mit einem zumindest seitlich von flexiblen Bezugbereichen umgebenen und gegenüber diesen beim Dachöffnen oder -schließen relativbeweglichen Heckfenster nach dem Oberbegriff des Anspruchs 1 sowie nach dem Oberbegriff des Anspruchs 7.

Aus der DE 100 29 471 B4 ist ein Cabriolet-Fahrzeug mit einem sog. Softtop, also einem flexiblen Dachbezug, bekannt, das ein Heckfenster mit einem großen Durchsichtbereich aufweist. Das Heckfenster reicht hierfür bei geschlossenem Dach nach unten hin bis zu einem das Dach begrenzenden Stoffhaltebügel. Da dieser bei der Dachöffnung aufwärts bewegt wird und sich damit einem hintersten, bei geschlossenem Dach oberhalb der Heckscheibe gelegenen Spriegel annähert, wird in der Dachbewegung der zur Verfügung stehende Raum für das Heckfenster zwischen Stoffhaltebügel und hinterstem Spriegel verkleinert. Um dennoch eine Kollision zwischen einem dieser Teile und dem Heckfenster zu vermeiden, ist dieses relativbeweglich gegenüber seitlich davon gelegenen Bezugbereichen und kann in der Dachbewegung mit seinem unteren Ende den Stoffhaltebügel überragen. Um zu verhindern, daß außen auf dem Dachbezug oder Heckfenster befindliches oder darauf einwirkendes Wasser in den Innenraum eindringen kann, muß zumindest der Raum zwischen den seitlichen Bezugbereichen und der Heckscheibe abgedichtet werden, wozu jeweils ein flexibler und spannbarer Stoffloseabschnitt vorgesehen ist, der häufig auch als Wassertasche bezeichnet wird. Insbesondere im Nahbereich des Stoffhaltebügels, in dem ein seitlicher Rahmen des Heckfensters bereits geendet hat und die Wassertasche dort ohne direkten Kontakt zum Heckfenster verläuft, stellt sich ein Abdichtungsproblem.

Die EP 1 398 189 A2 zeigt ein Cabriolet-Fahrzeug mit einem seitlich von flexiblen Bezugbereichen umgebenen und gegenüber diesen beweglichen Heckfenster. Hierbei ergibt sich zwischen dem Heckfenster und den Bezugbereichen ein Abdichtungsproblem.

Der Erfindung liegt das Problem zugrunde, die Abdichtung bei gegenüber umgebenden Stoffbereichen beweglichen Heckfenstern zu verbessern.

Die Erfindung löst dieses Problem durch ein Cabriolet-Fahrzeug mit den Merkmalen des Anspruchs 1 sowie durch ein Cabriolet-Fahrzeug mit den Merkmalen des Anspruchs 7. Hinsichtlich weiterer Merkmale und vorteilhafter Weiterbildungen der Erfindung wird auf die Ansprüche 2 bis 6 und 8 bis 11 verwiesen.

Mit der Erfindung in der Ausbildung nach Anspruch 1 ist dadurch, daß der Stoffloseabschnitt nach unten hin an einem die Heckscheibe untergreifenden Stoffhaltebügel festgelegt ist und dieser hierfür eine von einem Teil des Stoffloseabschnitts durchgriffene Halteöffnung aufweist, eine sichere Wasserableitung nach unten hin erreicht. Zwischen Heckfenster und seitlichem Bezug angesammeltes Wasser wird in die Halteöffnungen abgeleitet, wodurch ein Eindringen in den Innenraum verhindert ist.

Wenn sich vorteilhaft die Halteöffnung am unteren Ende des bezüglich der Fahrzeugquerrichtung inneren und der seitlichen Kante der Heckscheibe nahen Randes des Stoffloseabschnitts befindet, ist verhindert, daß sich an diesem innersten Ende der Wassertasche befindendes Wasser weiter einwärts in Richtung des Innenraumes laufen kann. Statt dessen wird es vollständig nach unten abgeleitet.

Dabei kann die Halteöffnung in Doppelfunktion nicht nur eine Halterung für die Wassertasche, sondern auch eine Einleitungsöffnung für von dem Stoffloseabschnitt abgeleitetes Wasser ausbilden. Dieses kann dann abwärts in den Spannbügel eindringen und von dort aus nach unten hin ablaufen.

In der Ausbildung nach Anspruch 7 ist mit der verdickten Randsperre eine Barriere gegen eine Wasserbewegung weiter zu einer vertikalen Längsmittelebene geschaffen, wodurch das auf der Wassertasche befindliche Wasser daran gehindert wird, weiter nach innen in den bei der Dachbewegung nicht mehr von dem Heckfenster überdeckten freien Bereich zu laufen. Vielmehr kann es die Barriere nicht überwinden und wird nach unten hin abgeleitet. Diese Merkmale können insbesondere auch mit denen des Anspruchs 1 kombiniert sein.

Konstruktiv einfach umfaßt die Randsperre einen umgeschlagenen Randbereich des Stoffabschnitts, wobei zur Verdikkung in den Hohlraum des umgeschlagenen Randbereichs eine Schnur aus flexiblem Material, zum Beispiel Moosgummi oder ähnliches, eingezogen sein kann, wobei ein solches Material gleichzeitig sehr elastisch ist und durch den Stoffhaltebügel gespannt werden kann.

Sofern die Randsperre in die Halteöffnung des Stoffhaltebügels einmündet und die Verdickung die Halteöffnung durchgreift, ist in jedem Fall eine Einleitung des dem inneren Rand der Wassertasche laufenden Wassers in den Stoffhaltebügel gewährleistet. Die Randsperre bildet dabei eine Wasserführung in die Halteöffnung aus und ist gleichzeitig durch den Stoffhaltebügel mit spannbar.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:

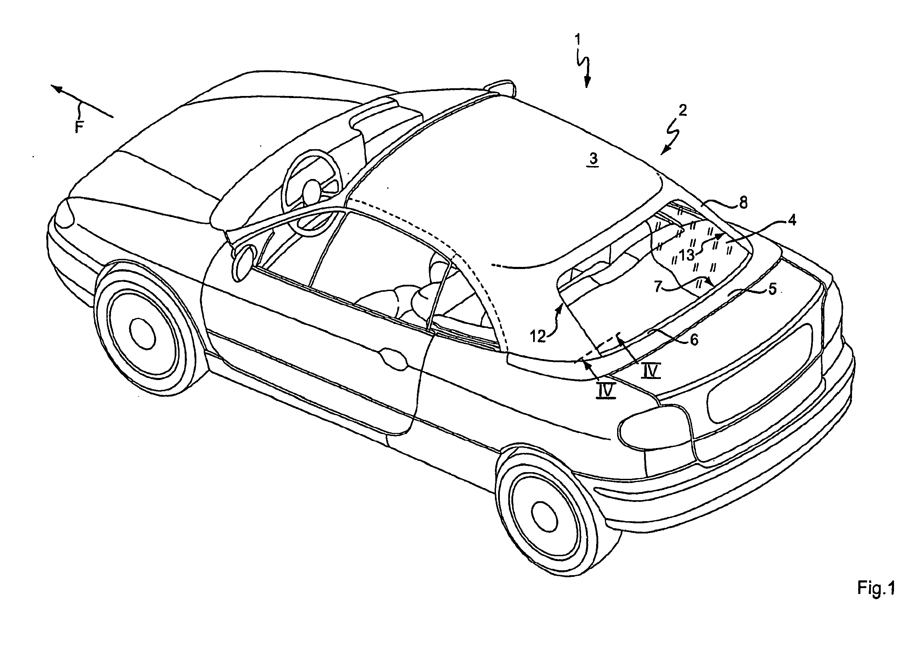

- Fig. 1: eine perspektivische Ansicht eines erfindungsgemäßen Cabriolet-Fahrzeugs von schräg oben und hinten bei geschlossenem Dach,
- Fig. 2: eine Ansicht auf das sich öffnende Dach mit aufwärts geschwenktem Stoffhaltebügel aus ähnlicher Perspektive wie Fig. 1,
- Fig. 3: eine Detailansicht etwa des Details III in Fig. 2 aus gedrehter Perspektive mit nach links vorne weisender Blickrichtung,
- Fig. 4: eine Schnittdarstellung etwa entsprechend der Linie IV-IV in Fig. 1, also bei geschlossenem Dach,
- Fig. 5: eine Schnittdarstellung etwa entsprechend der Linie V-V in Fig. 2, also während der Dachöffnung,
- Fig. 6: eine Detailansicht des linken unteren Randbereichs der Öffnung für das - selbst nicht eingezeichnete - Heckfenster,
- Fig. 7: eine Ansicht auf den linken Randbereich der Öffnung für das - selbst nicht eingezeichnete - Heckfensters aus ähnlicher Ansicht wie in Fig. 3 mit zusätzlich eingezeichneten Befestigungsmitteln für die Wassertasche.

Das erfindungsgemäße Teil- oder Voll-Cabriolet-Fahrzeug 1 umfaßt ein Dach 2 mit einem flexiblen Dachbezug 3 zumindest in seinem hinteren, ein Heckfenster 4 umfassenden Abschnitt.

Das Fahrzeug 1 kann sowohl ein Zweisitzer sein als auch einen größeren Innenraum mit zwei oder mehr Sitzreihen hintereinander aufweisen.

Das Dach 2 ist zumindest teilweise beweglich und teilweise oder vollständig zu seiner Öffnung im rückwärtigen Fahrzeugbereich ablegbar. Im gezeichneten Ausführungsbeispiel ist an dem Fahrzeug 1 ein gegenüber der Karosserie bewegliches Deckelteil 5 vorgesehen, auf dem ein rückwärtiger Dachbereich im geschlossenen Dachzustand mit einem das Dach 2 heckwärts begrenzenden und den Bezug 3 spannenden Stoffhaltebügel 6 aufsteht und das bei geöffnetem Dach 2 oberhalb eines Dachaufnahmeraums schließbar ist.

Das Heckfenster 4 ist an seinem unteren Rand 7 nicht fest mit dem Stoffhaltebügel 6 verbunden, sondern liegt bei geschlossenem Dach 2 mittelbar oder unmittelbar dichtend daran an.

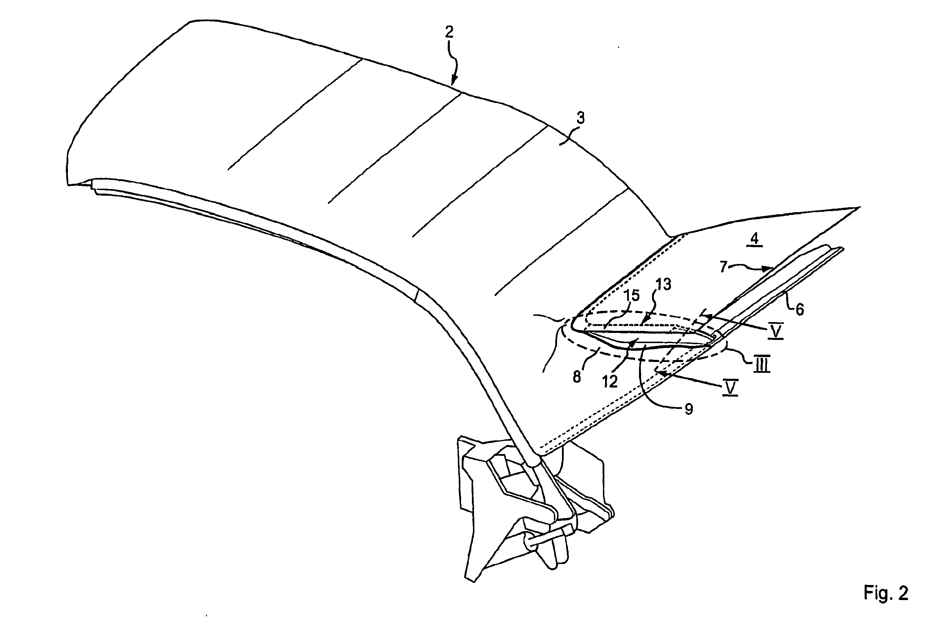

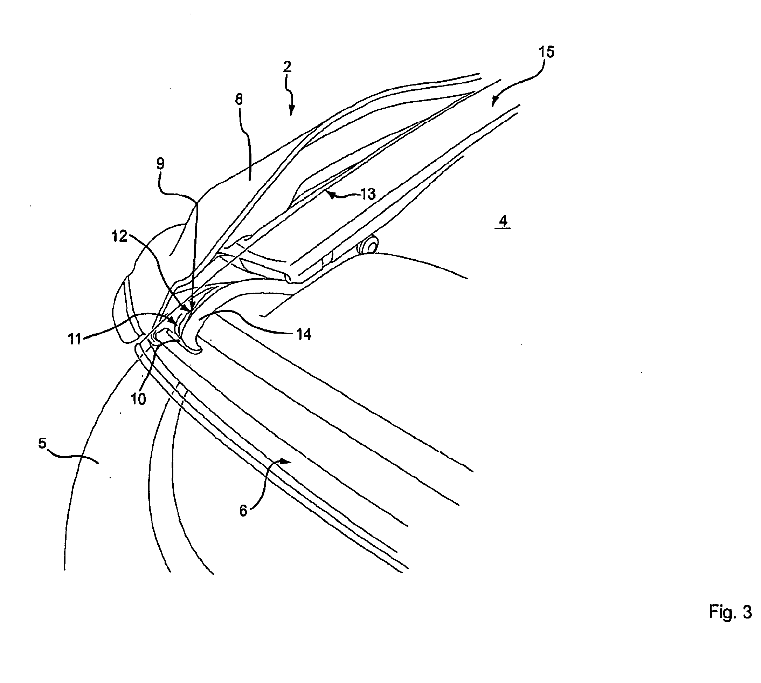

Der Stoffhaltebügel 6 ist zur Dachöffnung aufwärts schwenkbar (Fig. 2, Fig. 3), wobei sich das Heckfenster 3 von diesem löst und ihn mit seinem unteren Rand 7 übergreift. Nach hinreichendem Aufwärtsschwenken des Stoffhaltebügels 6 kann das Deckelteil 5 öffnen, so daß das Dach 2 dann abgesenkt werden kann.

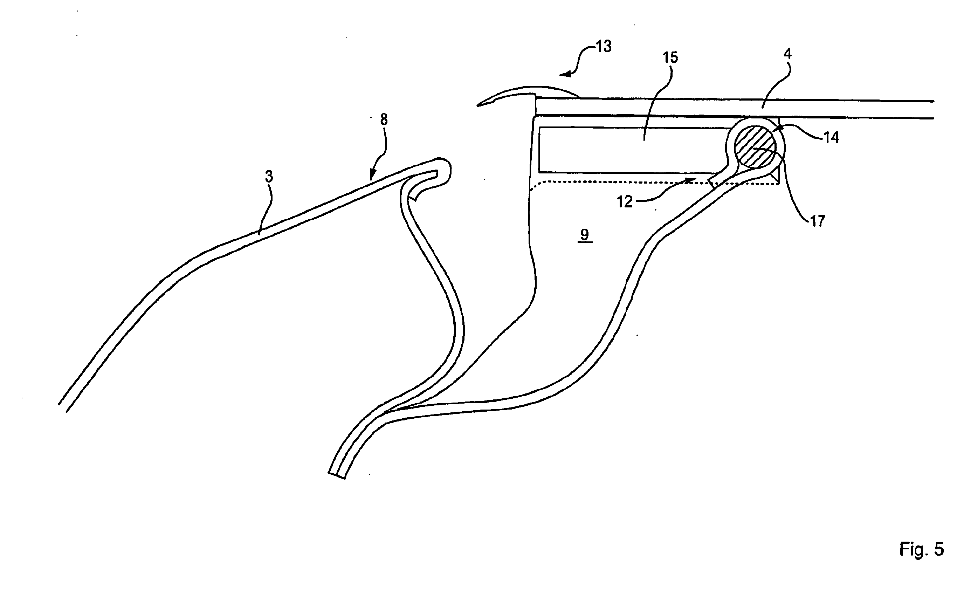

Zur Lösung des Heckfensters 4 von dem Stoffhaltebügel 6 ist das Heckfenster 4 seitlich an entsprechend ausgeformten Kurvenkulissen - hier nur angedeutet - oder beispielsweise einer Mehrgelenkmechanik geführt und löst sich während der Dachöffnung in einer Relativbewegung auch von dieses seitlich umgebenden Bereichen 8 des Bezugs 3 nach oben hin (Fig. 3, Fig. 5), so daß es dann bei aufgestelltem Stoffhaltebügel 6 mit seiner unteren Kante 7 über diesen hinausbewegbar ist.

Zur Abdichtung der sich dabei bildenden Öffnungen zwischen dem Heckfenster 4 und den Bezugbereichen 8 ist an jeder Seite jeweils ein flexibler und spannbarer Stoffloseabschnitt 9 vorgesehen, der häufig auch als Wassertasche bezeichnet wird. Diese kann beispielsweise aus einer oder mehreren Stoffbahn(en) bestehen, die etwa gummiert sein oder wasserabweisend imprägniert sein können. Auch kann sie ganz aus einem flexiblen Kunststoff bestehen.

Die Wassertasche 9 ist nach unten hin an dem bei geschlossenem Dach 2 die Heckscheibe 4 untergreifenden Stoffhaltebügel 6 derart festgelegt, daß sie in diesen eingreift. Hierzu weist der Stoffhaltebügel 6 auf seiner Oberseite jeweils eine schlitzförmige Ausnehmung 10 als Halteöffnung für einen diese durchgreifenden Teil 11 des Stoffloseabschnitts 9 auf. Dieser Teil 11 ist unterhalb der Halteöffnung 10 und optisch unauffällig an dem Spannbügel 6 befestigt, zum Beispiel von unten vernietet.

Die beiden Halteöffnungen 10 befinden sich am Stoffhaltebügel 6 symmetrisch unterhalb der unteren Enden der bezüglich der Fahrzeugquerrichtung inneren und den seitlichen Kanten 13 der Heckscheibe 3 zugewandten Ränder 12 des Stoffloseabschnitts 9, so daß diese Ränder 12 in die Halteöffnungen 10 eingreifen und bei Absenken des Stoffhaltebügels 6 durch diese gespannt werden können.

Dabei erfüllen die Halteöffnungen 10 eine Doppelfunktion und bilden nicht nur Halterungen für die Stoffloseabschnitte, sondern auch Einleitungsöffnungen für von dem Stoffloseabschnitt 9 abgeleitetes Wasser.

Der Stoffloseabschnitt 9 ist hierfür an seinem bezüglich der Fahrzeugquerrichtung inneren und der seitlichen Kante 13 des Heckfensters 4 zugewandten Rand 12 mit einer parallel zu diesem Rand verlaufenden und verdickten Randsperre 14 versehen, die eine abwärts weisende Führung für von der Wassertasche 9 abzuhaltendes Wasser ausbildet. Das Wasser wird durch diese Randsperre 14 an einem Überlaufen in Richtung der Fahrzeugquermitte gehindert und mit nach unten in Richtung Stoffhaltebügel 6 abgeleitet.

Die Randsperre 14 kann einteilig mit dem Stoffloseabschnitt 9 durch einen umgeschlagenen und eine Schlaufe ausbildenden Randbereich des Stoffabschnitts 9 gebildet sein, wobei in den Hohlraum des umgeschlagenen Randbereichs eine Schnur 17 aus flexiblem Material eingezogen sein kann, zum Beispiel aus Moosgummi, die eine erhebliche Flexibilität und Elastizität aufweist. Alternativ kann die Randsperre auch durch ein gesondertes Teil, etwa ein Kunststoffprofil, gebildet und an dem Stoffloseabschnitt 9 festgelegt sein.

Die Randsperre 14 mündet mit in die Halteöffnung 10 des Stoffhaltebügels 6 ein und durchgreift diese an ihrem der Fahrzeugquermitte zugewandten Ende. Der Durchmesser der Randsperre 14 entspricht dabei ungefähr der Breite der Halteöffnung 10 in Fahrzeuglängsrichtung, so daß ein Ende der Öffnung 10 im wesentlichen von der Randsperre 14 ausgefüllt ist, die unterhalb der Halteöffnung an dem Stoffhaltebügel 6 mittelbar über benachbarten Stoffbereich der Wassertasche 9 oder selbst unmittelbar festgelegt ist.

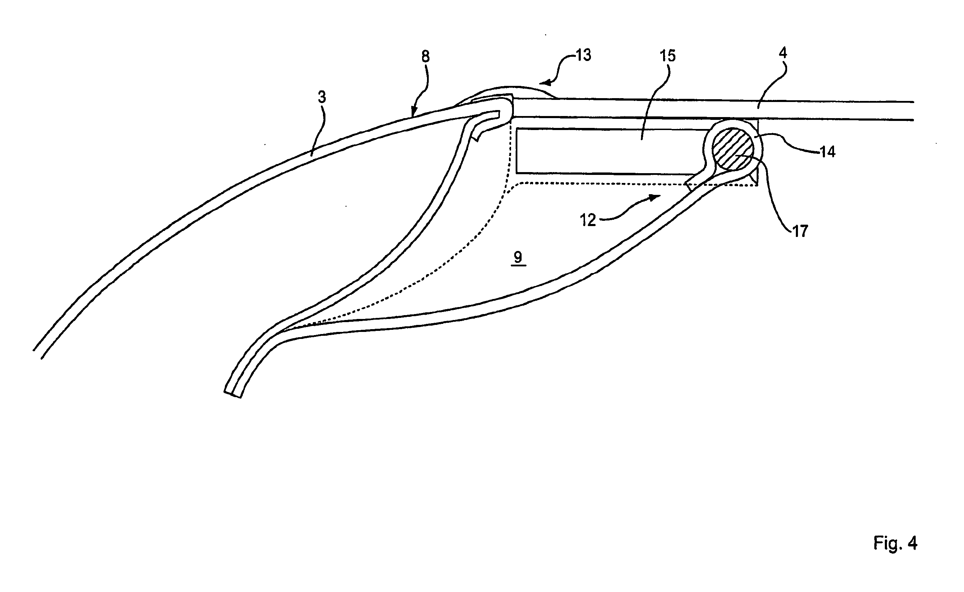

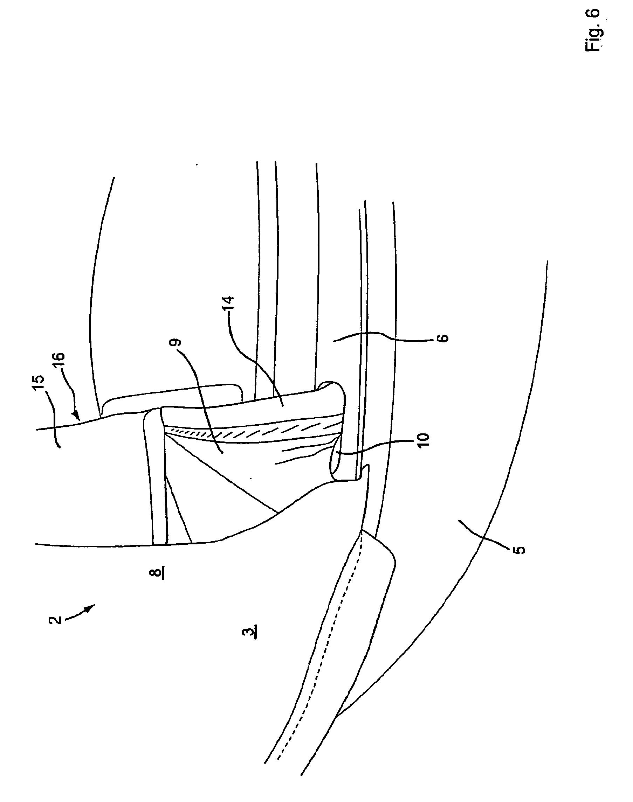

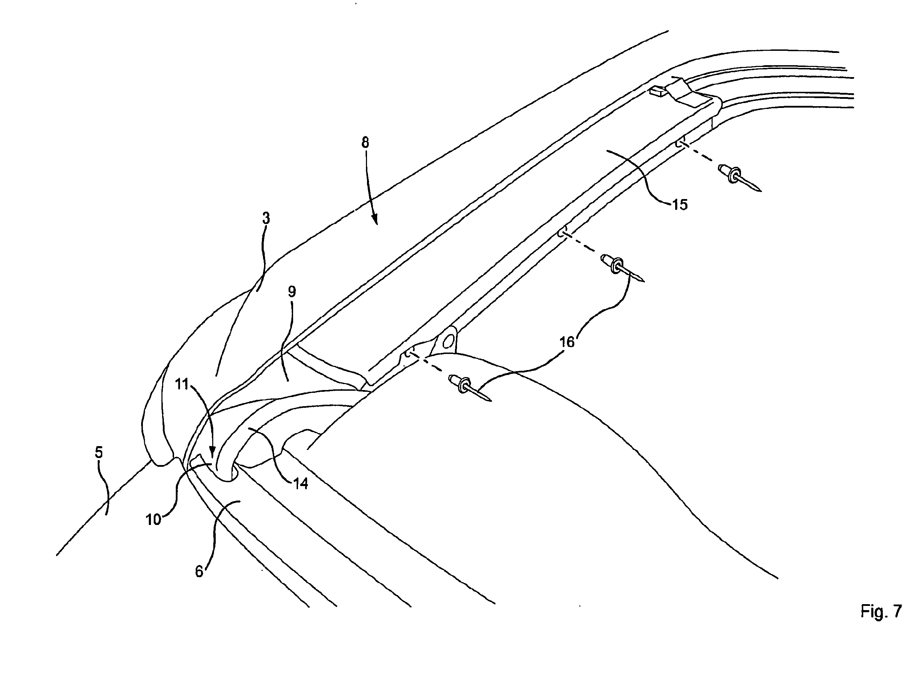

Wie beispielsweise in Fig. 4 bis Fig. 7 sichtbar ist, liegt das Heckfenster 4 seitlich auf mitbeweglichen und längs erstreckten Rahmenteilen 15 auf, die hier von dem Stoffloseabschnitt 9 übergriffen sind, so daß dieser zwischen der Scheibe und dem Rahmenteil 15 liegt. Da die Wassertasche sich von hier aus nach außen einteilig erstreckt, wird auch bei Dachbewegung sich direkt am Rand des Heckfensters 4 ansammelndes Wasser mit nach außen und unten abgeleitet und findet keine Möglichkeit, etwa das Heckfenster 4 zu unterwandern. Weiter übergreift der Stoffloseabschnitt 9 den Rahmenteil 15 sogar noch und ist auf dessen nach innen hin weisender Seite festgelegt. Hierzu dienen in der Darstellung nach Fig. 7 mehrere einzelne Nieten 16. Auch ein flächiges Verkleben ist zusätzlich oder alternativ möglich.

## Patentansprüche

1. Cabriolet-Fahrzeug (1) mit einem seitlich von flexiblen Bezugbereichen (8) umgebenen und gegenüber diesen relativbeweglichen Heckfenster (4), wobei zur Abdichtung zwischen den Bezugbereichen (8) und dem Heckfenster (4) jeweils ein flexibler und spannbarer Stoffloseabschnitt (9) vorgesehen ist, der häufig auch als Wassertasche bezeichnet wird,
**dadurch gekennzeichnet,**
**daß** der Stoffloseabschnitt (9) nach unten hin an einem die Heckscheibe (4) untergreifenden Stoffhaltebügel (6) festgelegt ist und der Stoffhaltebügel (6) für diese Halterung eine von einem Teil (11) des Stoffloseabschnitts (9) durchgriffene Halteöffnung (10) aufweist.

2. Cabriolet-Fahrzeug nach Anspruch 1,
**dadurch gekennzeichnet,**
**daß** die Halteöffnung (10) sich am unteren Ende des bezüglich der Fahrzeugquerrichtung inneren und der seitlichen Kante (13) der Heckscheibe (4) zugewandten Randes des Stoffloseabschnitts (9) befindet.

3. Cabriolet-Fahrzeug nach einem der Ansprüche 1 oder 2,
**dadurch gekennzeichnet,**
**daß** die Halteöffnung (10) in Doppelfunktion eine Einleitungsöffnung für von dem Stoffloseabschnitt (9) abgeleitetes Wasser ausbildet.

4. Cabriolet-Fahrzeug nach einem der Ansprüche 1 bis 3,
**dadurch gekennzeichnet,**
**daß** der Stoffloseabschnitt (9) an seinem bezüglich der Fahrzeugquerrichtung inneren und der seitlichen Kante (13) der Heckscheibe (4) zugewandten Rand (12) eine verdickte Randsperre (14) aufweist.

5. Cabriolet-Fahrzeug nach Anspruch 4,
**dadurch gekennzeichnet,**
**daß** die Randsperre (14) in die Halteöffnung (10) des Stoffhaltebügels (6) einmündet und die Verdickung die Halteöffnung durchgreift.

6. Cabriolet-Fahrzeug nach einem der Ansprüche 4 oder 5,
**dadurch gekennzeichnet,**
**daß** die Randsperre unterhalb der Halteöffnung (10) an dem Stoffhaltebügel (6) festgelegt ist.

7. Cabriolet-Fahrzeug.mit einem seitlich von flexiblen Bezugbereichen (8) umgebenen und gegenüber diesen beweglichen Heckfenster, wobei zur Abdichtung nach innen zwischen den Bezugbereichen (8) und der Heckscheibe (4) jeweils ein flexibler und spannbarer Stoffloseabschnitt (9) vorgesehen ist, der häufig auch als Wassertasche bezeichnet wird,
**dadurch gekennzeichnet,**
**daß** der Stoffloseabschnitt (9) an seinem bezüglich der Fahrzeugquerrichtung inneren und der seitlichen Kante (13) der Heckscheibe (4) zugewandten Rand (12) eine verdickte Randsperre (14) aufweist.

8. Cabriolet-Fahrzeug nach Anspruch 7,
**dadurch gekennzeichnet,**
**daß** die Randsperre (14) einen umgeschlagenen Randbereich des Stoffabschnitts (9) umfaßt.

9. Cabriolet-Fahrzeug nach Anspruch 8,
**dadurch gekennzeichnet,**
**daß** in den Hohlraum des umgeschlagenen Randbereichs eine Schnur (17) aus flexiblem Material eingezogen ist.

10. Cabriolet-Fahrzeug nach einem der Ansprüche 1 bis 9,
**dadurch gekennzeichnet,**
**daß** der Stoffloseabschnitt (9) zu einer vertikalen Fahrzeuglängsmittelebene einen das Heckfenster (4) untergreifenden Rahmenabschnitt (15) zumindest bereichsweise übergreift und auf dessen nach innen hin weisender Seite festgelegt (16) ist.

11. Cabriolet-Fahrzeug nach Anspruch 7,
**dadurch gekennzeichnet,**
**daß** der Stoffloseabschnitt (9) nach unten hin an einem die Heckscheibe (4) untergreifenden Stoffhaltebügel (6) festgelegt ist und der Stoffhaltebügel (6) für diese Halterung eine von einem Teil (11) des Stoffloseabschnitts (9) durchgriffene Halteöffnung (10) aufweist.

## Claims

1. A convertible vehicle (1) comprising a rear window (4), which is surrounded laterally by flexible cover regions (8) and is movable with respect to the latter, a respective flexible and tensible loose-fabric portion (9), commonly also referred to as a water pocket, being provided for sealing between the cover regions (8) and the rear window (4),
**characterised in that**
the loose-fabric portion (9) is fixed at the bottom to a cloth retaining bracket (6) engaging the rear window (4) from below and said cloth retaining bracket (6) comprises a retaining opening (10) for said retention, through which opening (10) a part (11) of the loose-fabric portion (9) extends.

2. The convertible vehicle according to claim 1, **characterised in that** the retaining opening (10) is located at the lower end of the edge of the loose-fabric portion (9) located on the inside with respect to the transverse direction of the vehicle and facing the lateral edge (13) of the rear window (4).

3. The convertible vehicle according to any one of claims 1 or 2, **characterised in that** the retaining opening (10) also doubles as an inlet opening for water drained from the loose-fabric portion (9).

4. The convertible vehicle according to any one of claims 1 to 3, **characterised in that** the loose-fabric portion (9) comprises a thickened edge stop (14) at its edge (12) located on the inside with respect to the transverse direction of the vehicle and facing the lateral edge (13) of the rear window (4).

5. The convertible vehicle according to claim 4, **characterised in that** the edge stop (14) terminates in the retaining opening (10) of the cloth retaining bracket (6) and the thickened part passes through the retaining opening.

6. The convertible vehicle according to any one of claims 4 or 5, **characterised in that** the edge stop is fixed to the cloth retaining bracket (6) below the retaining opening (10).

7. A convertible vehicle comprising a rear window, which is surrounded laterally by flexible cover regions (8) and is movable with respect to the latter, a respective flexible and tensible loose-fabric portion (9), commonly also referred to as a water pocket, being provided for sealing towards the interior between the cover regions (8) and the rear window (4),
**characterised in that**
that the loose-fabric portion (9) comprises a thickened edge stop (14) at its edge (12) located on the inside with respect to the transverse direction of the vehicle and facing the lateral edge (13) of the rear window (4).

8. The convertible vehicle according to claim 7, **characterised in that** the edge stop (14) comprises a folded-over edge region of the fabric portion (9).

9. The convertible vehicle according to claim 8, **characterised in that** a cord (17) of a flexible material extends inside the hollow space of the turned-over edge region.

10. The convertible vehicle according to any one of claims 1 to 9, **characterised in that**, with respect to a vertical longitudinal centre plane of the vehicle, the loose-fabric portion (9) extends at least partially over a frame portion (15) engaging the rear window (4) from below and is fixed (16) to the inward-facing side of said frame portion (15).

11. The convertible vehicle according to claim 7,
**characterised in that**
the loose-fabric portion (9) is fixed at the bottom to a cloth retaining bracket (6) engaging the rear window (4) from below and said cloth retaining bracket (6) comprises a retaining opening (10) for said retention, through which opening (10) a part (11) of the loose-fabric portion (9) extends.

## Revendications

1. Véhicule cabriolet (1) comprenant une lunette arrière (4), qui est entourée latéralement par des régions d'enveloppe (8) flexibles et est déplaçable par rapport à ces dernières, une section respective de pinces d'étoffe (9) flexible et tendable, souvent appelée réservoir d'eau, étant destinée à réaliser l'étanchéité entre les régions d'enveloppe (8) et la lunette arrière (4),
**caractérisé en ce que**
la section de pinces d'étoffe (9) est fixée en bas sur un étrier de retenue (6) qui vient en prise dans la lunette arrière (4) d'en bas et qui comprend une ouverture de retenue (10) pour effectuer ladite retenue, ladite ouverture de retenue (10) étant traversée par une partie (11) de la section de pinces d'étoffe (9).

2. Véhicule cabriolet selon la revendication 1, **caractérisé en ce que** l'ouverture de retenue (10) est disposée à l'extrémité inférieure du bord de la section de pinces d'étoffe (9), ce bord étant disposé à l'intérieur par rapport à la direction transversale du véhicule et faisant face au bord latéral (13) de la lunette arrière (4).

3. Véhicule cabriolet selon l'une quelconque des revendications 1 ou 2, **caractérisé en ce que** l'ouverture de retenue (10) sert en même temps d'ouverture d'admission pour de l'eau évacuée de la section de pinces d'étoffe (9).

4. Véhicule cabriolet selon l'une quelconque des revendications 1 à 3, **caractérisé en ce que** la section de pinces d'étoffe (9) comprend une butée périphérique épaissie (14) sur son bord (12) disposé à l'intérieur par rapport à la direction transversale du véhicule et faisant face au bord latéral (13) de la lunette arrière (4).

5. Véhicule cabriolet selon la revendication 4, **caractérisé en ce que** la butée périphérique (14) se termine dans l'ouverture de retenue (10) de l'étrier de retenue (6) et sa partie épaissie s'étend à travers l'ouverture de retenue.

6. Véhicule cabriolet selon l'une quelconque des revendications 4 ou 5, **caractérisé en ce que** la butée périphérique est fixée sur l'étrier de retenue (6) au-dessous de l'ouverture de retenue (10).

7. Véhicule cabriolet comprenant une lunette arrière, qui est entourée latéralement par des régions d'enveloppe (8) flexibles et est déplaçable par rapport a ces dernières, une section respective de pinces d'étoffe (9) flexible et tendable, souvent appelée réservoir d'eau, étant destinée à réaliser l'étanchéité vers l'intérieur entre les régions d'enveloppe (8) et la lunette arrière (4),
**caractérisé en ce que**
la section de pinces d'étoffe (9) comprend une butée périphérique épaissie (14) sur son bord (12) disposé à l'intérieur par rapport à la direction transversale du véhicule et faisant face au bord latéral (13) de la lunette arrière (4).

8. Véhicule cabriolet selon la revendication 7, **caractérisé en ce que** la butée périphérique (14) comprend une région périphérique rabattue de la section de pinces d'étoffe (9).

9. Véhicule cabriolet selon la revendication 8, **caractérisé en ce qu'**un fil (17) en matériau flexible s'étend à l'intérieur de l'espace vide de la région périphérique rabattue.

10. Véhicule cabriolet selon l'une quelconque des revendications 1 à 9, **caractérisé en ce que**, par rapport à un plan central longitudinal vertical, la section de pinces d'étoffe (9) s'étend au moins partiellement au-dessus d'une section de cadre (15) venant en prise dans la lunette arrière (4) d'en bas et est fixée (16) sur la face intérieure de ladite section de cadre (15).

11. Véhicule cabriolet selon la revendication 7,
**caractérisé en ce que**
la section de pinces d'étoffe (9) est fixée en bas sur un étrier de retenue (6) qui vient en prise dans la lunette arrière (4) d'en bas et qui comprend une ouverture de retenue (10) pour effectuer ladite retenue, ladite ouverture de retenue (10) étant traversée par une partie (11) de la section de pinces d'étoffe (9).
